(19) **Europäisches Patentamt / European Patent Office / Office européen des brevets**

(11) **EP 1 215 863 B1**

(12) **EUROPEAN PATENT SPECIFICATION**

(45) Date of publication and mention of the grant of the patent:
**14.02.2007 Bulletin 2007/07**

(51) Int Cl.:
***H04L 27/20*** $^{(2006.01)}$

(21) Application number: **01129886.6**

(22) Date of filing: **14.12.2001**

(54) **Phase shifter**

Phasenschieber

Déphaseur

(84) Designated Contracting States:
**DE FR GB NL**

(30) Priority: **18.12.2000 JP 2000383781**

(43) Date of publication of application:
**19.06.2002 Bulletin 2002/25**

(73) Proprietor: **MATSUSHITA ELECTRIC INDUSTRIAL CO., LTD.**
**Kadoma-shi, Osaka 571-8501 (JP)**

(72) Inventor: **Ohhashi, Kazuyuki**
**Yokosuka-shi,**
**Kanagawa 239-0831 (JP)**

(74) Representative: **Grünecker, Kinkeldey, Stockmair & Schwanhäusser Anwaltssozietät Maximilianstrasse 58 80538 München (DE)**

(56) References cited:
**EP-A- 0 783 210**　　　　**DE-C1- 19 529 271**

- **PATENT ABSTRACTS OF JAPAN vol. 007, no. 288 (E-218), 22 December 1983 (1983-12-22) & JP 58 165419 A (TOKYO SHIBAURA DENKI KK), 30 September 1983 (1983-09-30)**
- **PATENT ABSTRACTS OF JAPAN vol. 1997, no. 08, 29 August 1997 (1997-08-29) & JP 09 093080 A (FUJITSU LTD; FUJITSU VLSI LTD), 4 April 1997 (1997-04-04)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a phase offset calculation method for giving a signal a desired phase shift and a phase offset circuit.

Description of the Related Art

The ITU (International Telecommunication Union) is proceeding with the development of IMT2000, a global unified mobile communication standard. A W-CDMA (Wide band Code Division Multiple Access) system has been approved as one of the IMT2000-compliant standards.

According to the IMT2000 technical specification (3G TS 25.214 Version 3.1.0 (1999-12) Technical specification p.25 to p.32), a CDMA communication base station is obliged to have a function of executing closed-loop mode transmit diversity for every transmit channel.

Closed loop mode transmit diversity for a physical channel (DPCH: Dedicated Physical Channel) is a technology of controlling the phase and amplitude of a transmission signal and sending the transmission signal based on a message included in feedback information (FBI: Feedback Information) sent from a mobile station.

Controlling the phase and amplitude of a transmission signal is expected to have the effects that the mobile station side will be able to improve the level of a reception signal and clearly distinguish between interference signals from other mobile stations and the original reception signal.

An IMT2000-compliant W-CDMA communication system requires transmit phase θ to be provided with at least 8 types of phase shift (phase offset). More specifically, transmit phase θ needs to be provided with phase shifts (phase offsets) of +180°, -135°, -90°, -45°, 0°, +45°, +90° and +135°.

Moreover, the IMT2000-compliant standard requires that the above-described transmit phase control be performed for every transmit channel, that is, for every mobile station in communication.

When the amplitude and phase of a transmission signal are controlled, it is a normal practice that phase control is performed after adjusting the signal amplitude by multiplying an amplitude adjustment coefficient.

In this case, performing a calculation for amplitude adjustment will increase the number of bits of data, which will increase the burden on phase offset calculations.

Furthermore, a QPSK (Quadrature Phase Shift Keying) signal consists of two signals orthogonal to each other (I signal and Q signal) and it is necessary to adjust the amplitude and phase for each signal.

This will further increase the circuit scale of a control circuit for controlling the amplitude and phase (circuit for mapping signal points at desired coordinates on a phase plane).

Furthermore, the IMT2000-compliant W-CDMA system requires phase control for every transmit channel, which increases the scale of an amplitude/phase control circuit (signal point mapping circuit) contrary to the demand for miniaturization of the apparatus. This also involves an increase in power consumption of the apparatus.

Cellular phones are subject to stringent requirements for miniaturization and low power consumption, and the existence of such inconvenience poses a considerable problem in implementing cellular phones compliant with the new standard.

The present invention has been implemented to solve such problems and it is one of objects of the present invention to reduce the scale of a circuit that controls the amplitude and phase of a signal and achieve low power consumption of the circuit as well.

Document EP 0 783 210 A2 describes that in a spectrum spread communication system, transmission data is modulated based on π/4-shift QPSK modulation according to two spreading code sequences. The modulation circuit of the transmitter is comprised of a first phase shifter and a second phase shifter. The first phase shifter is realized by a sign inversion. The remaining phase shift that is smaller than 90° is performed by the second phase shifter. However, this document does not refer to the positioning of an amplitude adjustment means in a closed loop transmission power control technology.

SUMMARY OF THE INVENTION

When a phase shift is given to a signal, a phase offset circuit of the present invention gives a phase shift of a multiple of 90° first and then a phase shift smaller than 90°. The phase shift of a multiple of 90° is executed actually by changing the sign of a signed binary number.

A mode of the phase offset circuit of the present invention focuses on the fact that a QPSK signal is made up of combinations of "+1" and "-1" (expressed by a signed binary number) and when phase offset θ is a multiple of 90°, the phase offset circuit only carries out inversion of data signs (that is, inversion between + and -). This phase offset calculation by sign inversion is carried out on a QPSK signal before an amplitude adjustment calculation.

Then, when phase offset θ can be expressed by a total of multiples of 90° and values other than 90°, the phase offset of the remaining angle component after subtracting the 90° multiple component is realized through a phase offset calculation.

This phase offset calculation is carried out by a phase offset calculator on the data after amplitude adjustment. Before carrying out an amplitude adjustment calculation, a phase shift of a multiple of 90° is realized by applying a sign inversion to the QPSK signal and then giving a phase shift of an angle (rotation angle) smaller than 90°. This two-stage configuration makes it possible to simplify the circuit and reduce power consumption of the circuit.

In a mode of the phase offset circuit of the present invention, the circuit that gives a phase shift with a rotation angle smaller than 90° has a fixed phase offset function that gives a predetermined amount of a phase offset and determines whether or not to give a fixed phase offset to an input signal according to a control signal.

Using the phase offset circuit of the present invention makes it possible to easily construct a CDMA communication base station apparatus compliant with the IMT2000 standard.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a block diagram showing a configuration example of a phase offset circuit of the present invention;
FIG.2A is a block diagram showing a specific configuration example of the phase offset circuit of the present invention;
FIG. 2B is a view illustrating an inversion operation of a sign inverter;
FIG.3A is a view illustrating typical coordinate points on an IQ phase plane of a QPSK signal;
FIG.3B is a view illustrating a method of giving a phase shift on the IQ phase plane of the QPSK signal;
FIG.4A is a block diagram showing another configuration example of the phase shift circuit of the present invention;
FIG.4B is a block diagram showing a configuration example of a conventional phase shift circuit without using the present invention;
FIG.5 is a block diagram showing a configuration of a CDMA communication base station apparatus to which the present invention is applied;
FIG.6A is a drawing showing a configuration of a downlink control channel sent from a mobile station;
FIG.6B is a drawing showing a relationship between an amplitude adjustment weighting factor and amplitude value;
FIG.6C is a drawing showing a relationship between an amplitude adjustment weighting factor and a rotation phase;
FIG.7 is a block diagram showing a specific configuration example of the phase calculator shown in FIG.5; and
FIG.8 is a flow chart showing a transmit diversity procedure at the CDMA communication base station apparatus to which the present invention is applied.

DETAILED DESCRIPTION OF THE PREFERRED EMBODIMENTS

(Embodiment 1)

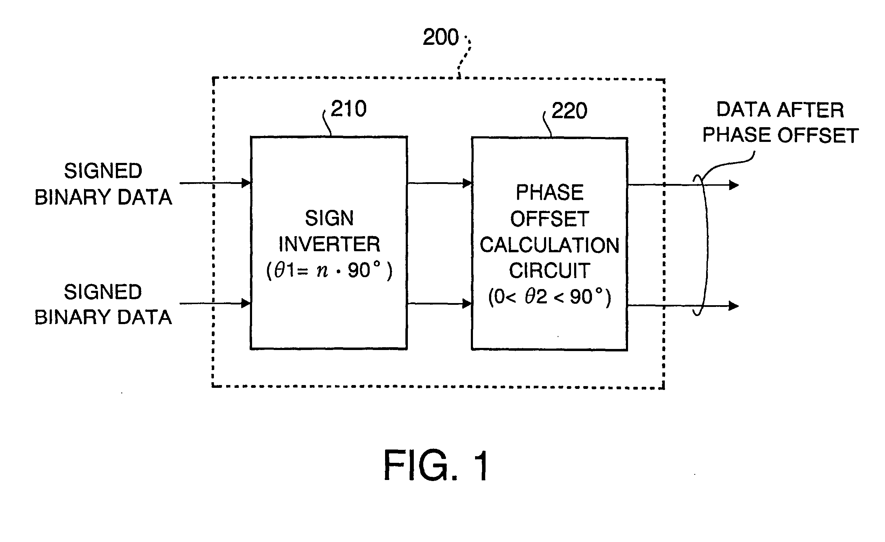

FIG.1 is a block diagram showing a configuration example of a phase offset circuit of the present invention.

Phase offset circuit 200 shown in FIG.1 includes sign inverter 210 to give an input signal (signed binary data bit) a phase shift of a multiple of 90° and phase offset calculation circuit 220 to give a phase shift with an angle (rotation angle) smaller than 90°.

For example, suppose an amount of offset of the phase of a QPSK signal is expressed by a sum of a multiple of 90° and other value (rotation angle smaller than 90°).

That is, suppose phase offset amount θ is expressed by expression (1) below:

$$\theta = 90a + b \quad (a=0,1,2,3\ldots,\ 0<b<90) \quad \cdots\cdots \quad (1)$$

In this embodiment, phase offset processing of the component of a multiple of 90° of the amount of offset is realized by sign inversion first.

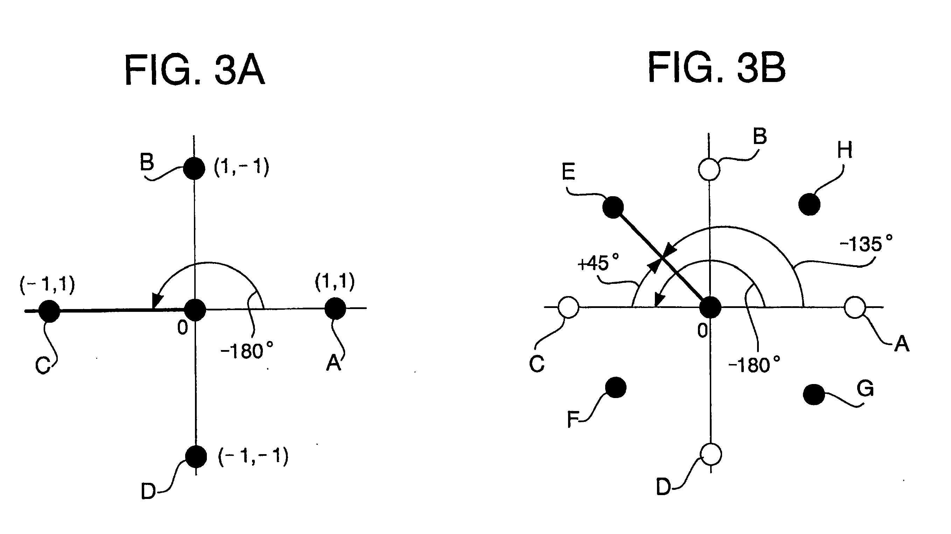

That is, as shown in FIG.3A, a phase shift of a multiple of 90° can be realized by substituting "+" and "-" at coordinates of the respective points on the I axis and Q axis on the IQ phase plane.

That is, in order to shift the phase of point A (coordinates (1,1)) in FIG.3A to point B (coordinates (1,-1)), the sign of the Q coordinate of point A may be changed from "+" to "-".

Likewise, in order to move point A (coordinates (1,1)) to point C (coordinates (-1, 1)), the sign of the I coordinate of point A may be changed from "+" to "-".

Likewise, in order to move point A (coordinates (1,1)) to point D (coordinates (-1, -1)), the signs of the I coordinate and Q coordinate of point A may be changed from "+" to "-". Focused on this point, the circuit in FIG.1 carries out signal processing of giving the input signal a phase shift of a multiple of 90° through sign inversion processing at sign inverter 210.

Then, a phase shift calculation is performed on the remaining phase offset component obtained by subtracting the component of a multiple of 90° (phase shift smaller than 90°) by phase offset calculation circuit 220.

For example, consider a case where point A is moved to point E as shown in FIG.3B.

In this case, point A is moved to point C by a sign inversion (phase shift of -180°) and then a +45° phase shift is performed to move point C to point E.

Thus, sign inverter 210 (90° multiple phase offset circuit) in FIG.1 inverts the sign of the original data to give a phase offset of a multiple of 90° to the I signal and Q signal.

Then, phase offset calculation circuit 220 performs a +45° phase shift calculation to move point C to point E shown in FIG.3B.

According to such a method, for an amount of offset θ with different variable a and same b in expression (1) above, signal processing can be easily realized through a sign inversion and phase offset calculation with a common rotation angle (fixed offset calculation).

Furthermore, for the remaining rotation angle after excluding the component of a multiple of 90°, a phase offset calculation is performed in the end, and therefore the amount of phase shift required is less than 90°, which results in a simple calculation. That is, signal processing can be realized only through an attenuating calculation, which simplifies the configuration of the circuit for phase shift calculations.

(Embodiment 2)

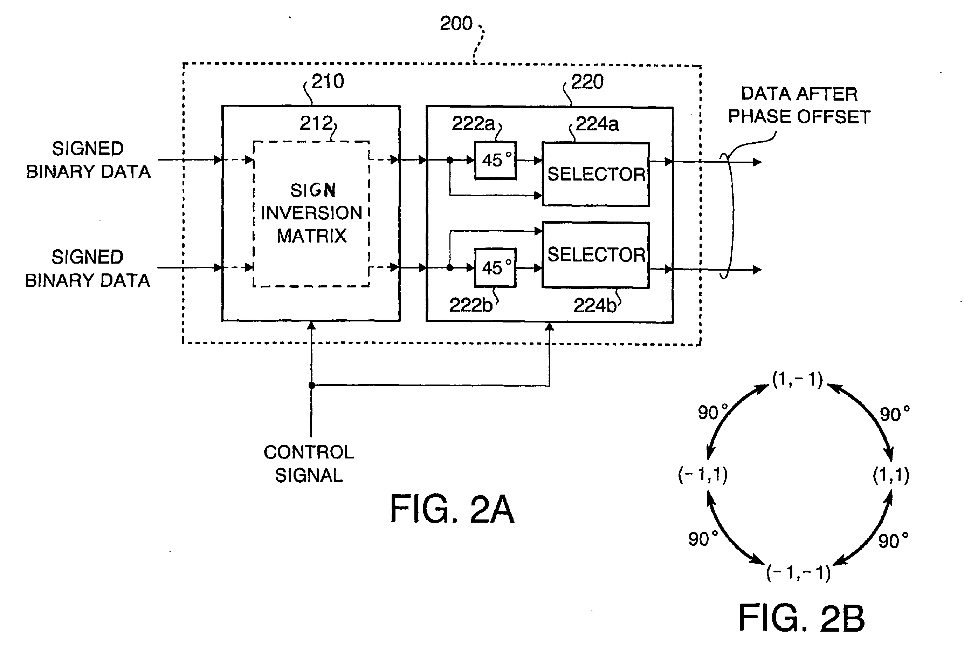

FIG.2A is a block diagram showing an example of a specific configuration of the phase offset circuit shown in FIG.1.

Sign inverter 210 that calculates a phase shift of a multiple of 90° includes sign inversion matrix 212. This sign inversion matrix 212 carries out a sign inversion as shown in FIG.2B on a QPSK signal input to carry out a phase shift of a multiple of 90°.

Furthermore, phase offset calculator 220 that carries out a phase shift with a rotation angle smaller than 90° includes phase shifters 222a and 222b that carry out a 45° phase shift and selectors 224a and 224b. Selector 224a and 224b select either a signal subjected to phase shift processing or a signal not subjected to phase shift processing.

Operations of sign inversion matrix 212 and selectors 224a and 224b are controlled by a control signal given from the outside.

The circuit in FIG.2A can easily execute various shift calculations as shown in FIG.3B. This will be explained in further detail in the following embodiments.

(Embodiment 3)

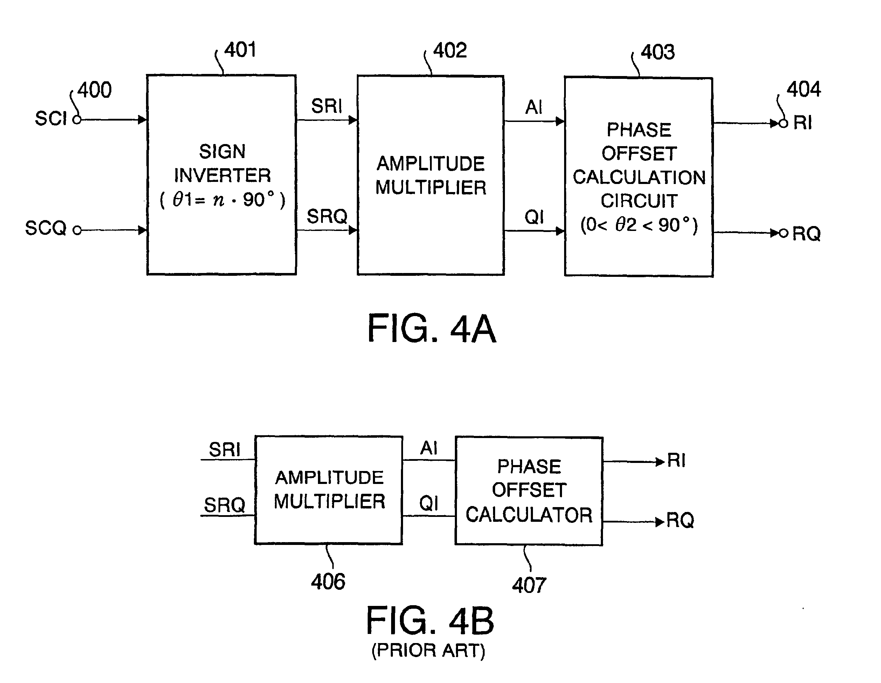

FIG.4A is a block diagram showing another example of a phase shift circuit. While the above-described embodiment only adjusts the phase of a signal, the phase shift circuit of this embodiment adjusts both the phase and amplitude of a signal.

Sign inverter 401 is given QPSK signals SCI and SCQ via signal input terminals 400a and 400b. Here, SCI is an in-phase component (I component) signal and SCQ is a quadrature component (Q component) signal.

Sign inverter 401 realizes a phase shift with a rotation angle of a multiple of 90°.

Sign inverter 401 outputs in-phase component SRI and quadrature component SRQ, which are phase offset calculation intermediate components, to amplitude multiplier 402.

Amplitude multiplier 402 multiplies two signals SRI and SRQ by an amplitude coefficient and adjusts the signal amplitudes.

Amplitude multiplier 402 outputs two signals AI and AQ whose amplitudes have been adjusted.

Two signals AI and AQ are input to phase offset calculator 403 and phase offset calculator 403 carries out phase offset calculations with a rotation angle greater than 0° and smaller than 90° on AI and AQ.

Phase offset calculator 403 outputs RI and RQ from output terminals 404.

Thus, the phase offset apparatus of this embodiment has advantages that a phase offset of θ whose component of a multiple of 90° is only different is realized by only changing processing in sign inverter 401 and other offset calculations can also be suppressed to a calculation of 90° or less.

FIG. 4B shows a configuration (conventional example) in which a desired phase offset is given by phase offset calculator 407 alone without using the present invention.

The content of phase offset processing using only phase offset calculator 407 is as follows:

$$RI \simeq AI\cos\theta + AQ\sin\theta, \quad RQ = AI\cos\theta - AQ\sin\theta \cdots (2)$$

where, AI and AQ are the input signals of the I component and Q component of QPSK, and RI and RQ are the output signals.

In the case where the calculation in expression (2) is executed using the configuration of the present invention shown in FIG.4A, the calculation expression to be executed by phase offset calculator 403 is simplified as shown in expression (3):

$$RI = (AI+AQ)\cos\theta, \quad RQ = (AI-AQ)\cos\theta \cdots (3)$$

Furthermore, when phase offset θ to be realized is a multiple of 45°, the calculation expression to be realized by phase offset calculator 403 is simplified as shown in expression (4):

$$RI = AI\cos, \quad RQ = AQ\cos(90-\theta) \cdots (4)$$

Thus, using the present invention can simplify an offset calculation and can thereby simplify the circuit configuration and reduce power consumption of the circuit.

(Embodiment 4)

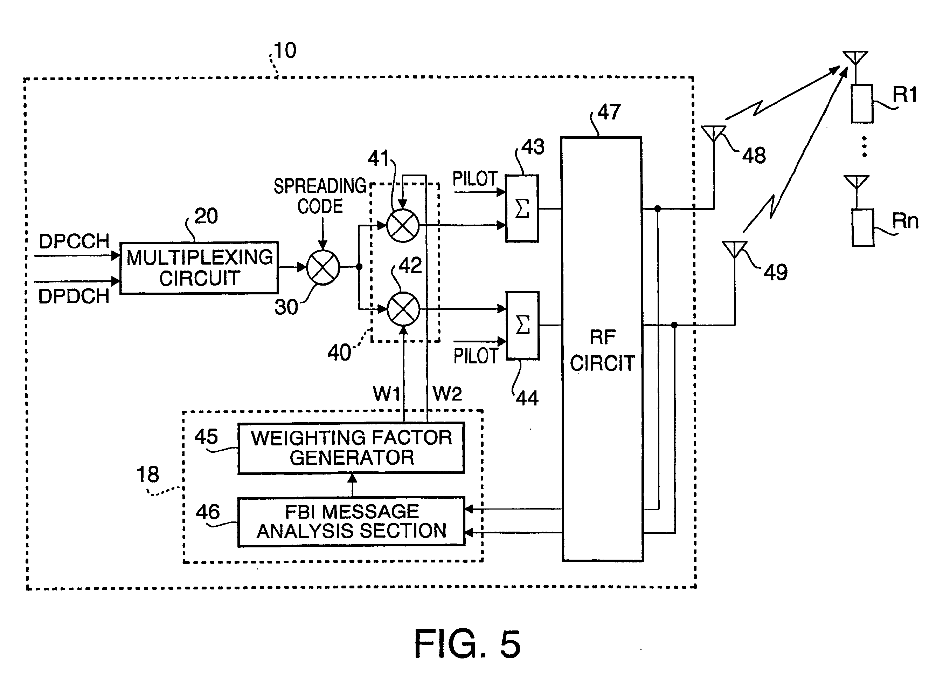

FIG.5 is a block diagram showing a main configuration of a CDMA base station apparatus according to Embodiment 4 of the present invention.

Base station apparatus 10 can realize closed-loop mode transmit diversity for every transmit channel.

In FIG.5, multiplexing circuit 20 multiplexes a dedicated physical control channel (DPCCH) and a dedicated physical data channel (DPDCH). Spreading code multiplier 30 multiplies a spreading code.

After the multiplication by the spreading code, the signal is divided into a signal for antenna 48 and a signal for antenna 49.

Signal point mapping circuit 40 multiplies the respective divided signals by weighting factors (W1, W2) and adjusts their phases and amplitudes. In this way, the signal points are mapped at desired coordinates of the IQ phase plane.

These phases and amplitudes are adjusted by multiplying the respective antenna signals by weighting factors W1 and W2 output from transmit control section 18. The weighting factors are multiplied using calculators 41 and 42.

Transmit control section 18 includes FBI message analysis section 46 and weighting factor generator 45.

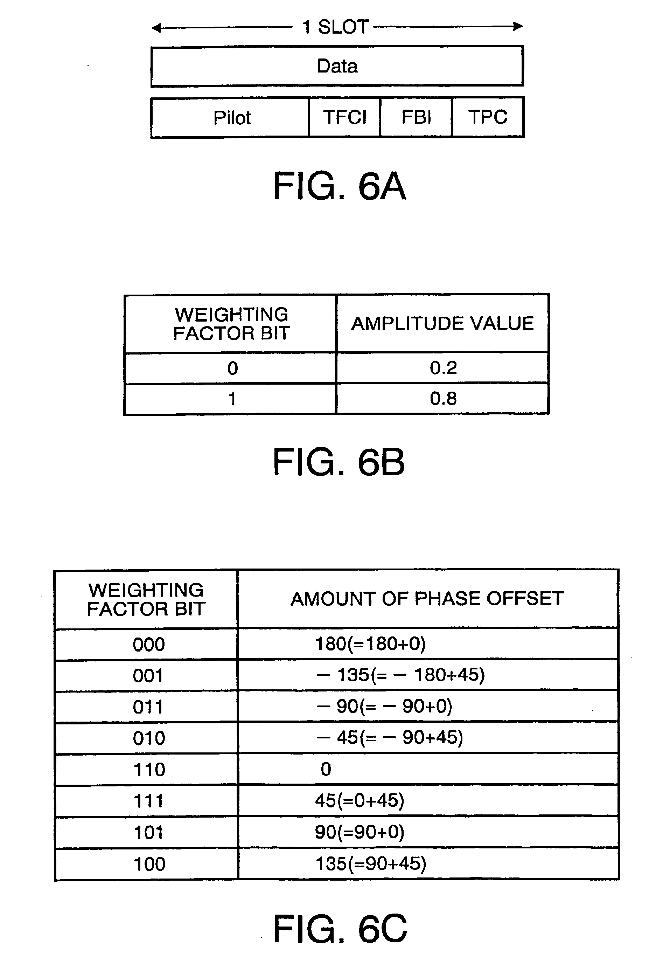

As shown in FIG.6A, a downlink control channel sent from mobile stations (R1 to Rn) on the other end of communication includes data and control signals (including pilot signal, TFCI signal, FBI signal, TPC signal).

FBI message analysis section 46 analyzes a message included in an FBI signal and gives the analysis result to weighting factor generator 45.

Weighting factor generator 45 generates weighting factors W1 and W2 necessary to adjust the phase and amplitude of a transmission signal and supplies W1 and W2 to calculators 41 and 42, respectively.

Transmit channel assembly circuits 43 and 44 in FIG.5 assemble transmit channels by adding pilot signals to the transmission signals of the respective antennas. The transmit channels are sent from antennas 48 and 49 via RF circuit 47.

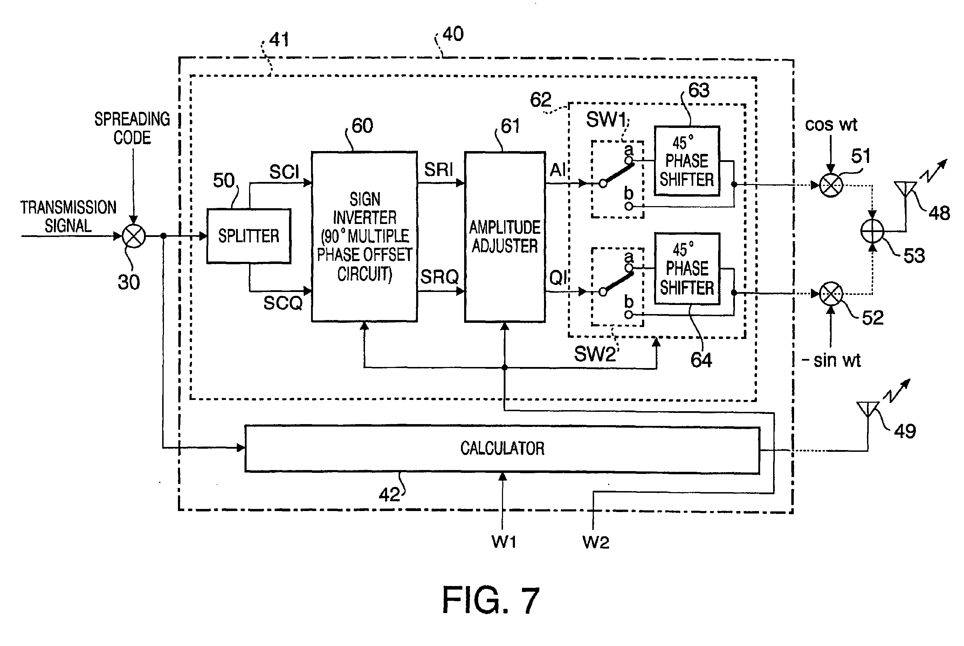

FIG.7 is a block diagram showing an example of a specific configuration of phase offset calculator 41 (42) shown in FIG.5. Phase offset calculators 41 and 42 have an identical configuration. The configuration of phase offset calculator 41 will be explained below.

The transmission signal with a spreading code multiplied is split into I (In-phase) and Q (Quadrature phase) signals by splitter 50 (QPSK: Quadrature Phase Shift Keying).

In the figure, the I signal is described as SCI and the Q signal is described as SCQ. These SCI and SCQ signals

EP 1 215 863 B1

are multiplied by weighting factor W2 and the phase and amplitude of the signal are adjusted.

The phase is adjusted by sign inverter (90° multiple phase offset circuit) 60 and phase offset calculator 62. On the other hand, the amplitude is adjusted by amplitude adjuster 61.

A method of realizing a desired phase offset will be explained below.

Weighting factor W2 includes a control bit to adjust the amplitude and a control bit to adjust the phase.

As shown in FIG.6B, "0" and "1" of the control bits to adjust the amplitude mean magnifying the amplitude "0.2 times" and "0.8 times", respectively.

As shown in FIG.6C, it is possible to express 8 types of phase shift of +180°, -135°, -90°, -45°, 0°, +45°, +90° and +135° by combining "1" and "0" of the control bits (3 bits) to adjust the phase.

What should be noted here is that all phase shifts can be expressed by combinations of phase shifts of multiples of 90° (including no phase shift) and phase shifts of +45°.

That is, +180=(180+0), -135=(-180+45), -90=(-90+0), -45=(-90+45), 45=(0+45), 90=(90+0), +135=(90+45). Therefore, it is possible to express all phase offsets by the presence or absence of phase offsets of multiples of 90° (or no phase offset) and phase offsets of +45° (FIG.3A, FIG.3B).

Furthermore, phase offsets of multiples of 90° can be realized by substituting "+" and "-" of coordinates of the points on the I axis and Q axis of the IQ phase plane as shown in FIG.3A.

That is, in order to shift the phase of point A (coordinates (1,1)) in FIG.3A to point B (coordinates (1,-1)), the sign of the Q coordinate of point A may be changed from "+" to "-".

Likewise, in order to move point A (coordinates (1,1)) to point C (coordinates (-1, 1)), the sign of the I coordinate of point A may be changed from "+" to "-". Likewise, in order to move point A (coordinates (1,1)) to point D (coordinates (-1, -1)), the signs of the I coordinate and Q coordinate of point A may be changed from "+" to "-".

Focused on this point, the present invention realizes phase shifts of multiples of 90° by inverting the sign of data whose phase is to be shifted.

Then, after a phase shift of a multiple of 90° through sign inversion, a phase offset of +45° is calculated. For example, consider a case where point A is shifted to point E as shown in FIG.3B. In this case, point A is shifted to point C through a sign inversion (phase shift of -180°) and then a +45° phase shift is performed to shift point C to point E.

Based on these considerations, in signal mapping circuit 40 in FIG.7, the sign inverter (90° multiple phase offset circuit) inverts the sign of the original data to give a phase offset of a multiple of 90° to the I signal and Q signal first. In FIG.7, the I signal and Q signal provided with offsets of multiples of 90° are expressed as SRI and SRQ.

Then, amplitude adjuster 61 adjusts the amplitude. The calculation for adjusting the amplitude is carried out by a calculation using 2's complement. Carrying out a calculation of 2's complement increases the total number of bits of the signal. That is, the number of bits of signals AI and AQ whose amplitudes have been adjusted by amplitude adjuster 61 is greater than the number of bits of signals SRI and SRQ provided with offsets of multiples of 90°.

Then, phase offset section 62 selects and controls whether or not to give a phase offset of +45°.

Phase offset section 62 includes switches SW1 and SW2, and 45° phase shifters 64 and 64.

When a phase offset of +45° is given, switches SW1 and SW2 are set to the a side and when there is no offset, switches SW1 and SW2 are set to the b side. Since it is only necessary to provide a phase shifter with a fixed amount of phase shift and change whether or not to use the phase shifter by a control signal, the circuit configuration is simple and phase offset control is simplified.

Multipliers 51 and 52 multiply the I and Q signals output from phase offset section 62 by carriers whose phase is shifted by 90°, and adder 53 combines these two signals into a transmission signal and the transmission signal is output from antenna 48 to the mobile station.

The present invention inverts the sign of an original signal, gives a phase offset of a multiple of 90° and then turns ON/OFF a phase offset of +45°.

Attempting to carry out a phase shift on a signal after amplitude adjustment at a time instead of using this method will require 8 types of coefficient to be multiplied on the data whose number of bits has increased by amplitude adjustment (signal with a large bit width), which will complicate calculations and increase the circuit scale.

This would increase the scale of an IMT2000-compliant system in particular, which is obliged to adjust phase offsets for every transmit channel (for every mobile station on the other end of communication) constituting considerable burden in the aspect of power consumption.

According to this embodiment, it is possible to give a desired phase offset only through simple data processing which is a signs inversion and switching of ON/OFF of a calculation of a fixed phase offset of +45°. Therefore, it is possible to map signal points with an extremely small circuit scale and also reduce power consumption drastically.

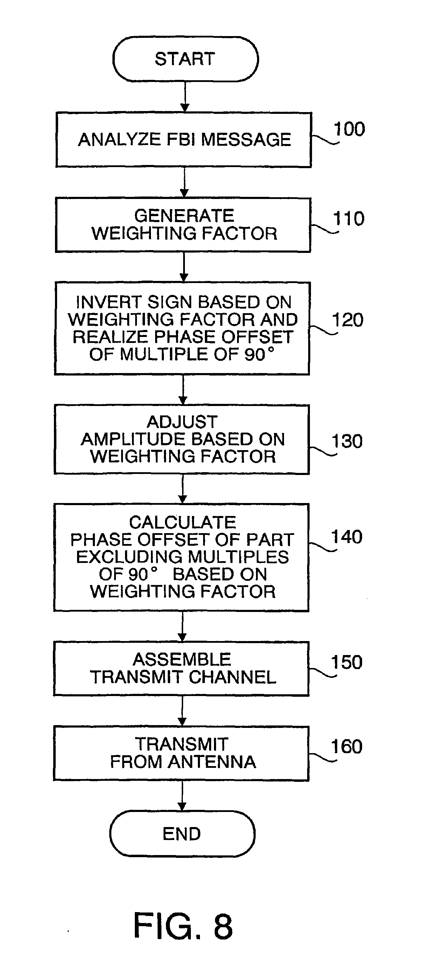

FIG.8 shows a transmit diversity procedure at the base station shown in FIG.5 and FIG.7.

First, an FBI message sent from the other end of communication is analyzed (step 100). Then, weighting factors are generated based on the analysis result (step 110).

Then, signs are inverted based on the weighting factors to provide phase offsets of multiples of 90° (step 120). Then, the amplitude is adjusted based on the weighting factors (step 130).

Then, based on the weighting factors, a phase offset of the part excluding multiples of 90° is calculated (step 140). Then, a transmit channel is assembled (step 150) and sent from the antenna (step 160).

As explained above, the present invention can implement closed loop mode transmit diversity which is essential to an IMT2000-compliant CDMA communication with a simplified configuration.

Especially, the IMT2000 standard obliges a base station apparatus to be able to carry out transmit diversity for every transmit channel, and therefore the effect of the present invention of reducing the circuit scale is extremely large and the present invention is quite effective in meeting demands for low cost, high yield, low power consumption and high integration.

That is, the present invention can realize phase offsets θ of multiples of 90° only through sign inversion. Furthermore carrying out sign inversion processing before multiplying an amplitude coefficient allows signal processing to be performed in a stage in which the number of signal bits is still small. This makes it possible to reduce the circuit scale and power consumption.

Furthermore, in the case where amount of phase shift θ is expressed by a sum of a multiple of 90° and other values, a sign inverter realizes a phase offset for the component of a multiple of 90° of θ, while a phase offset calculation after a multiplication by an amplitude coefficient realizes a phase offset for the remaining component excluding the component of the multiple of 90° from θ, which makes it possible to perform a phase offset calculation of the remaining component excluding the component of the multiple of 90° from θ using one common circuit, which is advantageous in terms of design of an integrated circuit.

This makes it possible to reduce the scale of a circuit that gives a signal a phase offset and reduce power consumption.

## Claims

1. A control circuit for controlling the phase shift and the amplitude of signed binary data of a signal comprising:

   a sign inversion circuit (401,60) adapted to control a phase offset of a multiple of 90° by inverting the sign of said signed binary data ; and
   a phase shift calculation circuit (403,62) adapted to control a phase offset smaller than 90 degree of a signal

   **characterized by**
   an amplitude adjustment circuit (402, 61) adapted to adjust the amplitude of the signal output from said sign inversion circuit (401, 60) and to output the resultant signal to said phase shift calculation circuit (403, 62).

2. The control circuit according to claim 1, wherein said phase shift circuit comprises a fixed phase offset section (63,64) adapted to give a predetermined amount of a fixed phase offset, and
   whether to output a signal with said fixed phase offset provided by said phase offset section (63, 64) or a signal without said fixed phase offset is selected according to a control signal (w2).

3. The control circuit according to claim 1 or 2, is further adapted to give a signal 8 types of phase offsets of +180°, -135°, -90°, -45°, 0°, +45°, +90° and +135°.

4. A CDMA communication base station apparatus (10) capable of performing the closed-loop transmission power control, being equipped with a control circuit as defined in any of claims 1-3.

5. A closed-loop transmission control method for controlling the phase and the amplitude of signed binary data of a signal transmitted from an antenna based on the feedback information from the other end of communication, comprising the steps of:

   controlling a phase offset of a multiple of 90° by inverting the sign of said signed binary data ;
   adjusting the amplitude of the signal that had been subjected to said sign inversion processing; and
   controlling a phase offset smaller than 90 degree of the resultant amplitude-adjusted signal.

## Patentansprüche

1. Regelschaltung zum Regeln der Phasenverschiebung und der Amplitude mit Vorzeichen versehener binärer Daten eines Signals, die umfasst:

eine Vorzeichenumkehrschaltung (401, 60), die so eingerichtet ist, dass sie einen Phasenversatz eines Vielfachen von 90° durch Umkehren des Vorzeichens der mit Vorzeichen versehenen binären Daten steuert; und eine Phasenverschiebungs-Berechnungsschaltung (403, 62), die so eingerichtet ist, dass sie einen Phasenversatz eines Signals von weniger als 90° steuert;

**gekennzeichnet durch**,

eine Amplitudenregulierschaltung (402, 61), die so eingerichtet ist, dass sie die Amplitude des von der Vorzeichenumkehrschaltung (401, 60) ausgegebenen Signals reguliert und das entstehende Signal an die Phasenverschiebungs-Berechnungsschaltung (403, 62) ausgibt.

2. Regelschaltung nach Anspruch 1, wobei die Phasenverschiebungsschaltung einen Abschnitt (63, 64) festen Phasenversatzes umfasst, der so eingerichtet ist, dass er ein vorgegebenes Maß eines festen Phasenversatzes verleiht, und entsprechend einem Steuersignal (w2) ausgewählt wird, ob ein Signal mit dem festen Phasenversatz, der durch den Phasenversatzabschnitt (63, 64) bereit gestellt wird, oder ein Signal ohne den festen Phasenversatz ausgegeben wird.

3. Regelschaltung nach Anspruch 1 oder 2, die des Weiteren so eingerichtet ist, dass sie einem Signal 8 Typen von Phasenversatz von +180°, -135°, -90°, -45°, 0°, +45°, +90° und +135° verleiht.

4. CDMA-Kommunikations-Basisstations-Vorrichtung (10), die in der Lage ist, die Sendeleistungsregelung durchzuführen und mit einer Regelschaltung nach einem der Ansprüche 1-3 versehen ist.

5. Sende-Regelverfahren zum Regeln der Phase und der Amplitude mit Vorzeichen versehener binärer Daten eines von einer Antenne gesendeten Signals auf Basis der Rückkopplungsinformationen von der anderen Kommunikationsendstelle, wobei sie die folgenden Schritte umfasst:

Steuern eines Phasensatzes eines Vielfachen von 90° durch Umkehren des Vorzeichens der mit Vorzeichen versehenen binären Daten;
Regulieren der Amplitude des Signals, das der Vorzeichenumkehrungsverarbeitung unterzogen worden ist; und
Steuern eines Phasenversatzes von weniger als 90° des entstehenden amplitudenregulierten Signals.

**Revendications**

1. Circuit de commande pour commander le changement de phase et l'amplitude de données binaires signées d'un signal comprenant :

un circuit d'inversion de signe (401, 60) adapté pour commander un décalage de phase d'un multiple de 90° en inversant le signe desdites données binaires signées ; et
un circuit de calcul de changement de phase (403, 62) adapté pour commander un décalage de phase plus petit que 90 degrés d'un signal ;

**caractérisé en ce que**
un circuit d'ajustement d'amplitude (402, 61) adapté pour ajuster l'amplitude du signal sorti à partir dudit circuit d'inversion de signe (401, 60) et pour sortir le signal résultant audit circuit de calcul de changement de phase (403, 62).

2. Circuit de commande selon la revendication 1, dans lequel ledit circuit de changement de phase comprend une section de décalage de phase fixe (63, 64) adaptée pour fournir une quantité prédéterminée d'un décalage de phase fixe, et
le fait de sortir un signal avec ledit décalage de phase fixe fourni par ladite section de décalage de phase (63, 64) ou un signal sans ledit décalage de phase fixe est sélectionné selon un signal de commande (w2).

3. Circuit de commande selon la revendication 1 ou 2, adapté en plus pour donner à un signal 8 types de décalages de phases de + 180°, -135°, -90°, -45°, 0°, +45°, +90° et +135°.

4. Dispositif de station de base de communication CDMA (10) capable d'effectuer la commande de puissance de transmission en boucle fermée, étant équipé avec un circuit de commande comme défini dans l'une quelconque des revendications 1-3.

5. Procédé de commande de transmission en boucle fermée pour commander la phase et l'amplitude de données binaires signées d'un signal transmis à partir d'une antenne sur la base de l'information de rétroaction depuis l'autre extrémité de communication, comprenant les étapes consistant à :

commander un décalage de phase d'un multiple de 90° en inversant le signe desdites données binaires signées ;
ajuster l'amplitude du signal qui avait été soumis audit traitement d'inversion de signe ; et
commander un décalage de phase plus petit que 90° du signal ajusté en amplitude résultant.

FIG. 1

EP 1 215 863 B1

FIG. 2A

FIG. 2B

# FIG. 3A

# FIG. 3B

EP 1 215 863 B1

**FIG. 4A**

**FIG. 4B**
(PRIOR ART)

FIG. 5

←——————— 1 SLOT ———————→

| Data |
|------|

| Pilot | TFCI | FBI | TPC |
|-------|------|-----|-----|

## FIG. 6A

| WEIGHTING FACTOR BIT | AMPLITUDE VALUE |
|:---:|:---:|
| 0 | 0.2 |
| 1 | 0.8 |

## FIG. 6B

| WEIGHTING FACTOR BIT | AMOUNT OF PHASE OFFSET |
|:---:|:---:|
| 000 | 180(=180+0) |
| 001 | −135(=−180+45) |
| 011 | −90(=−90+0) |
| 010 | −45(=−90+45) |
| 110 | 0 |
| 111 | 45(=0+45) |
| 101 | 90(=90+0) |
| 100 | 135(=90+45) |

## FIG. 6C

FIG. 7

START

ANALYZE FBI MESSAGE — 100

GENERATE
WEIGHTING FACTOR — 110

INVERT SIGN BASED ON
WEIGHTING FACTOR AND
REALIZE PHASE OFFSET
OF MULTIPLE OF 90° — 120

ADJUST
AMPLITUDE BASED ON
WEIGHTING FACTOR — 130

CALCULATE
PHASE OFFSET OF PART
EXCLUDING MULTIPLES
OF 90° BASED ON
WEIGHTING FACTOR — 140

ASSEMBLE
TRANSMIT CHANNEL — 150

TRANSMIT
FROM ANTENNA — 160

END

FIG. 8